# EUROPÄISCHE PATENTANMELDUNG

(11) **EP 1 998 598 A1**
(43) Veröffentlichungstag der Anmeldung: **03.12.2008**
(21) Anmeldenummer: 07109442.9
(22) Anmeldetag: 01.06.2007
(51) Int. Cl.: H05B 6/78, H05B 6/80

(54) **Verfahren zur Graphitierung von Kohlenstoff**

(71) Anmelder: SGL Carbon AG, 65203 Wiesbaden (DE)
(72) Erfinder: Wachtler, Mario, 86153, Augsburg (DE); Cadek, Martin, 86150, Augsburg (DE); Kraus, Thomas, 86678, Ehingen (DE); Friedrich, Jörg, 15537, Erkner (DE); Meyer-Plath, Asmus, 14471, Potsdam (DE); Oleszak, Franz, 16727, Oberkrämer (DE); Seifert, Susanne, 86637, Wertingen (DE); Mach, Reinhard, 13059, Berlin (DE); Maneck, Heinz-Eberhard, 15745, Wildau (DE); Peplinski, Burkhard, 12435, Berlin (DE)

(57) **Zusammenfassung**

Röntgenamorphes Kohlenstoffmaterial wird durch Einwirkung von elektromagnetischen Feldern aus dem Frequenzband der Radiowellen graphitiert.

## Beschreibung

Die Erfindung betrifft ein Verfahren zur Graphitierung von nicht graphitischem Kohlenstoff bzw. zur Erhöhung des Graphitierungsgrades von teilgraphitiertem Kohlenstoff durch Einwirkung elektromagnetischer Felder.

Zahlreiche im Wesentlichen aus Kohlenstoff bestehende Materialien, welche nicht die für Graphit typische Struktur regelmäßig gestapelter Graphenschichten aufweisen, lassen sich vorzugsweise durch thermische Behandlung bei Temperaturen oberhalb 2200 °C graphitieren. Die zur Graphitierung nötige Temperatur kann beispielsweise dadurch erzeugt werden, dass durch Einwirkung eines elektromagnetischen Wechselfelds im zu graphitierenden Kohlenstoff Wirbelströme induziert werden (induktive Graphitierung).

Aus dem US-Patent 6,375,918 ist ein Verfahren zur kontinuierlichen Graphitierung von pulverförmigem Kohlenstoff bekannt. Die für die Graphitierung nötige Wärme wird mittels Mikrowellen erzeugt. Mikrowellen sind elektromagnetische Wellen mit einer Frequenz im Bereich von 300 MHz bis 300 GHz.

Die Vorrichtung für die Graphitierung umfasst einen Ofen mit einem darunter positionierten Brennrohr, sowie Hohlleiter für Mikrowellen, welche in den Ofen hinein führen und dazu dienen, von oben Mikrowellen auf die oberste Schicht des im Brennrohr befindlichen Kohlenstoffpulvers einwirken zu lassen. Oberhalb des Ofens sorgt eine Vorrichtung für die kontinuierliche Zuführung des zu graphitierenden Kohlenstoffpulvers, und unterhalb des Brennrohres eine Vorrichtung für den kontinuierlichen Abtransport des graphitierten Materials, so dass der Füllstand im Brennrohr konstant ist.

Das obere Ende des Brennrohrs ragt in den unteren Teil des Ofen, dessen Querschnitt sich nach unten hin verengt. Das Brennrohr und der untere Teil des Ofens sind mit dem Kohlenstoffpulver gefüllt. Der Ofen und der obere Teil des Brennrohrs sind mit einer Wärmeisolierung versehen. Der untere Teil des Brennrohrs weist eine verminderte Wärmeisolierung auf, so dass hier das graphitierte Material abkühlen kann.

Wenn Kohlenstoffpulver durch den Ofen in das Brennrohr eingefüllt wird, dann befindet sich die oberste Schicht des Kohlenstoffpulvers am in den Ofen hinein ragenden obersten Ende des Brennrohrs. Unterhalb dieser obersten Kohlenstoffschicht bildet sich eine Hochtemperaturzone, in welcher die Graphitierung erfolgt. Durch das kontinuierliche Nachfüllen von weiterem Kohlenstoffpulver von oben her ist die Oberfläche der Hochtemperaturzone stets durch eine Schicht frisch zugeführten, noch nicht aufgeheizten Kohlenstoffpulvers bedeckt, welches die Hochtemperaturzone thermisch isoliert. Nach dem Passieren der Hochtemperaturzone durchläuft das Kohlenstoffmaterial die Abkühlungszone.

Die Besonderheit dieses Verfahrens besteht darin, dass die zur Graphitierung des Kohlenstoffpulvers nötige Temperatur durch direkte Beheizung des zu graphitierenden Materials erreicht wird.

Die Mikrowellenenergie wird über Hohlleiter zugeführt. Diese Hohlleiter müssen auf die verwendete Frequenz ausgelegt sein, da sie nur bestimmte Mikrowellen-Moden transportieren. Die Hohlleiter münden in den Hohlraum des Ofens, der einen Mikrowellen-Resonator bildet. An dessen Boden, der durch die oberste Schicht des kontinuierlich nachgefüllten Kohlenstoffpulvers gebildet wird, findet eine durch Energieabsorption des Materials abgeschwächte Totalreflexion der Mikrowelle statt. Die Phasen- und Modenlage der Mikrowellen-Strahlung muss sehr genau abgestimmt werden, so dass sie im Resonator am Ort der Hochtemperaturzone ein Feldstärkemaximum erreicht und die Energieeinkopplung effizient wird. Ändert sich aufgrund des ablaufenden Graphitierungsprozesses die Leitfähigkeit des Kohlenstoffpulvers, wird der Resonator verstimmt. Deshalb müssen Eduktzugabe und Produktentnahme sehr genau geregelt werden, bzw. die Phasen- und Modenform der Mikrowellenstrahlung muss nachgeregelt werden. Das Gesamtsystem ist somit hinsichtlich des Regelungsaufwands relativ anspruchsvoll.

Um einen verlustarmen Energietransport zu ermöglichen, müssen die Mikrowellenleiter aus einem leitfähigen Werkstoff (typischerweise Kupfer oder Messing) bestehen. Beim Graphitierungsprozess werden jedoch häufig aus dem Kohlenstoffmaterial gasförmige flüchtige Bestandteile (Spaltgase) ausgetrieben, welche Heteroatome wie beispielsweise Schwefel enthalten. Metallische Mikrowellenleiter sind in einer Vorrichtung gemäß US-Patent 6,375,918 daher einer sehr korrosiven Atmosphäre ausgesetzt.

Ferner muss eine Vorrichtung, welche Mikrowellenstrahlung nutzt, nach außen hin in geeigneter Weise abgeschirmt und gegen versehentliches Öffnen während des Betriebes gesichert werden, da Mikrowellenstrahlung durch ihre physiologische Wirkung, die in der Erwärmung polarisierbarer Moleküle (z.B. Wasser bei 2,45 GHz) besteht, eine gesundheitliche Gefährdung für das Betriebspersonal darstellt.

Erfindungsgemäß wird ein Verfahren zur induktiven Graphitierung von nicht graphitischem Kohlenstoffmaterial vorgeschlagen, wobei elektromagnetische Felder mit einer Frequenz im Bereich der Radiowellen, d.h. aus dem Frequenzband von 100 kHz bis 300 MHz in das zu graphitierende Material eingekoppelt werden. Die Einkopplung erfolgt induktiv, kapazitiv oder als eine Kombination von beiden Mechanismen, wobei die Erfindung nicht als an einen bestimmten Einkopplungsmechanismus gebunden zu verstehen ist.

Überraschenderweise wurde gefunden, dass graphitierbare kohlenstoffhaltige Partikel, deren Abmessungen im Mikrometerbereich oder darunter liegen, sich in einem elektromagnetischen Radiofrequenzfeld so stark erwärmen, dass es zur Graphitierung der Partikel kommt, obwohl die Partikelgröße um Größenordnungen kleiner ist als die eingesetzte Wellenlänge. Aus dem Stand der Technik (US 6,375,918) ist nur die Graphitierung bei Einwirkung von Mikrowellen bekannt, deren Wellenlängen um bis zu drei Größenordnungen kleiner sind als die der Radiowellen.

Ein weiterer Vorteil von Radiowellen gegenüber Mikrowellen besteht darin, dass keine das zu behandelnde Material einschließende Resonatorkavität notwendig ist, um ein Feldstärkemaximum in der zu erhitzenden Zone zu erzeugen. Stattdessen wird das Feldstärkemaximum durch das Nahfeld einer geeignet geformten Sendeantenne erzeugt, vorzugsweise einer Anordnung von Induktionsspulen. Die Antennenform kann der Geometrie der zu heizenden Zone leicht angepasst werden. Dadurch wird die Optimierung der Einkopplung der Energie insgesamt einfacher, da sie von der Einhaltung enger Resonanzbedingungen unabhängig ist.

Außerdem sind Radiowellen im Gegensatz zu Mikrowellen physiologisch weniger bedenklich, da sie nicht in der Lage sind, Wasser zu erwärmen. Daher sind die Anforderungen an die Abschirmung bei dem erfindungsgemäßen Verfahren weniger hoch als bei der Verwendung von Mikrowellen.

Neben der Umwandlung von nichtgraphitischem Kohlenstoff in Graphit lassen sich mit dem erfindungsgemäßen Verfahren weitere Aufgaben lösen. So kann das Verfahren zur thermischen Reinigung von Graphit benutzt werden. Ein spezieller Anwendungsfall ist dabei die Reinigung von Naturgraphit.

Darüber hinaus ist eine kombinierte thermische und chemische Reinigung möglich, indem das Verfahren bei Durchleitung reaktiver Gase durch das zu reinigende Material erfolgt, welche mit den Verunreinigungen zu flüchtigen Verbindungen reagieren und diese austragen.

Außerdem lassen sich strukturelle Defekte (z.B. Punktdefekte, Gitterdefekte, Stapelfolgenfehler) in Materialien mit gestörter Graphitstruktur ausheilen.

Für teilgraphitierte Materialien, d.h. Materialien mit einem Graphitierungsgrad größer 0 % und kleiner 100 %, lässt sich mit dem erfindungsgemäßen Verfahren der Graphitierungsgrad erhöhen.

Bei amorphen Kohlenstoffmaterialien wie Anthrazit und Ruß lässt sich durch das erfindungsgemäße Verfahren der Ordnungsgrad der Struktur erhöhen.

Weitere Details, Varianten und Vorteile der Erfindung können der folgenden ausführlichen Beschreibung, dem Ausführungsbeispiel und den Figuren entnommen werden.

Die Figuren zeigen:
- Figur 1: Schematische Darstellung einer Variante des erfindungsgemäßen Verfahrens, wobei die Antenne des Radiofrequenz-Generators eine Solenoidspule ist.
- Figur 2: Schematische Darstellung einer Variante des erfindungsgemäßen Verfahrens, wobei die Antenne des Radiofrequenz-Generators planar angeordnet ist.
- Figur 3: Schematische Darstellung einer Vorrichtung zum kontinuierlichen Betrieb des erfindungsgemäßen Verfahrens mit vorwiegend vertikalem Materialtransport.
- Figur 4: Schematische Darstellung einer Vorrichtung zum kontinuierlichen Betrieb des erfindungsgemäßen Verfahrens mit vorwiegend horizontalem Material-transport.
- Figur 5: Ergebnisse der XRD-Analyse (Vergleich zwischen Ausgangsmaterial und dem mit dem erfindungsgemäßen Verfahren erhaltenen Produkt).

Das erfindungsgemäße Verfahren ist zur Graphitierung von nicht graphitischem (röntgenamorphem) Kohlenstoff geeignet, sofern dieser durch thermische Behandlung graphitierbar ist.

Unter nicht graphitisch wird Kohlenstoff verstanden, bei dem der aus dem Röntgendiffraktogramm berechenbare d₀₀₂-Wert größer ist als 0,344 nm. In der idealen Graphitstruktur beträgt der d₀₀₂-Wert 0,3354 nm. Kohlenstoffmaterialien mit einem d₀₀₂-Wert zwischen 0,344 und 0,3354 nm zählen als graphitisch, wobei bei einem d₀₀₂-Wert von 0,344 nm der Graphitierungsgrad 0 beträgt und bei einem d₀₀₂-Wert von 0,3354 nm der Graphitierungsgrad 100 % erreicht (J.Maire, J.Mehring, Proceedings of the 4th Conference on Carbon, Pergamon Press 1960 S.345-350). Ein wesentlicher Parameter für das Erreichen eines hohen Graphitierungsgrades ist die bei der Graphitierung erreichte Maximaltemperatur.

In einer Variante des erfindungsgemäßen Verfahrens ist das Ausgangsmaterial Koks oder Pech. Vorzugsweise ist der Koks bereits kalziniert oder wird vor der erfindungsgemäßen Graphitierung in bekannter Weise kalziniert. Vorherige Kalzinierung des Kokses hat den Vorteil, dass während der Behandlung mit dem Radiofrequenzfeld keine bzw. weniger Spaltgase entstehen. Wird nicht kalzinierter Koks eingesetzt, dann erfolgt die Kalzinierung während der Einwirkung des Radiofrequenzfeldes, und bei der Verfahrensführung ist die Entstehung von Spaltgasen zu berücksichtigen.

In einer anderen Variante des erfindungsgemäßen Verfahrens ist das Ausgangsmaterial ein Kohlenstoffprecursor wie beispielsweise ein carbonisierbares, d.h. bei der Pyrolyse in Inertgasatmosphäre mit hoher Ausbeute in Kohlenstoff umwandelbares Bindemittel, z.B. Pech. Die Umwandlung des Precursors in Kohlenstoff erfolgt dann während der elektromagnetischen Bestrahlung.

Dem zu graphitierenden Kohlenstoffmaterial kann ggf. Graphit zugesetzt bzw. zugemischt sein. Dazu ist sowohl Naturgraphit als auch synthetischer Graphit geeignet, besonders bevorzugt ist der Zusatz der bereits graphitierten Form des zu graphitierenden Materials, um ein homogenes Endprodukt zu erhalten.

Der Vorteil der Beimischung von Graphit besteht in einer Erhöhung der Einkopplungseffizienz zu Beginn der Einwirkung des Radiofrequenz-Feldes. Dies kann insbesondere dann vorteilhaft sein, wenn das zu behandelnde Material ein am Anfang der Behandlung elektromagnetische Radiofrequenzfelder kaum absorbierender Kohlenstoff-Precursor ist.

Mit Zusatz eines Materials wie Graphit, welches Radiofrequenzfelder absorbiert, können auch nichtabsorbierende Materialien einer Hochtemperaturbehandlung z.B. zu Reinigungszwecken unterzogen werden, bei der die elektromagnetische Erwärmung von innen her erfolgt.

Bei der Dosierung des Graphitzusatzes ist ein Kompromiss zu treffen zwischen der Erhöhung der Radiofrequenz-Absorption einerseits und der Verminderung der Ausbeute andererseits durch die Herabsetzung des Anteils des zu graphitierenden Materials.

Der zu graphitierende Kohlenstoff kann in loser Form, z.B. als Pulver, als Paste oder als Formkörper vorliegen. Der Formkörper kann beispielsweise ein Pressling, Stab oder Strang sein. Der zu graphitierende Formkörper aus Kohlenstoff kann mit einem carbonisierbaren oder graphitierbaren Binder wie z.B. Harz, Pech oder Teer imprägniert sein.

Die Partikel des zu graphitierenden Materials können submikroskopische (Partikelgröße 100 nm bis 1000 nm), mikroskopische (Partikelgröße 1 µm bis 1000 µm, vorzugsweise 5 µm bis 50 µm) oder makroskopische (Partikelgröße 1 mm bis 100 mm) Partikel sein. Es können auch Gemische von Partikeln verschiedener Größen oder/und aus verschiedenen Kohlenstoffmaterialien eingesetzt werden.

Die elektromagnetischen Felder werden mittels eines Radiofrequenz-Generators und einer Antenne appliziert. Es sind dazu verschiedene Anordnungen der Antenne oder mehrerer Antennen relativ zu dem zu behandelnden Material möglich.

Vorzugsweise sind in der Vorrichtung für die Radiofrequenzfeld-Behandlung die Antennen vom zu behandelnden Material durch eine Wand getrennt. Vorzugsweise absorbiert diese Wand selbst Radiofrequenzfelder nur in wesentlich geringerem Maße als das zu behandelnde Material. Somit wird bei dem erfindungsgemäßen Verfahren im Gegensatz zu herkömmlichen Induktionsöfen das zu behandelnde Material nicht indirekt über die Wand erwärmt, sondern direkt durch das absorbierte elektromagnetische Feld. Das Material der Wand sollte für die Dauer des Prozesses beständig gegenüber den im Prozess auftretenden Temperaturen sein oder angemessen gekühlt werden. Ein diesen Anforderungen entsprechendes Wandmaterial ist Quarzglas.

Das zu behandelnde Material befindet sich in einem Reaktionsgefäß, das die Absorption des elektromagnetischen Feldes durch das zu behandelnde Material nicht oder nur gering stört. Bevorzugt werden Reaktionsgefäße eingesetzt, die aus Materialien wie beispielsweise Quarzglas bestehen, die Radiofrequenzfelder nur in wesentlich geringerem Maße absorbieren als das zu behandelnde Material. Alternativ können auch Reaktionsgefäße aus Radiofrequenzfelder absorbierenden Materialien wie Graphit eingesetzt werden, dann sollte jedoch die geometrische Anordnung des Reaktionsgefäßes bezüglich der Antenne so gestaltet sein, dass das Gefäßmaterial nur einem abgeschwächten Radiofrequenzfeld ausgesetzt ist. So wird erreicht, dass die Erwärmung des zu behandelnden Materials in erster Linie direkt durch Absorption des Radiofrequenzfeldes erfolgt, und nicht indirekt über das absorbierende Wandmaterial.

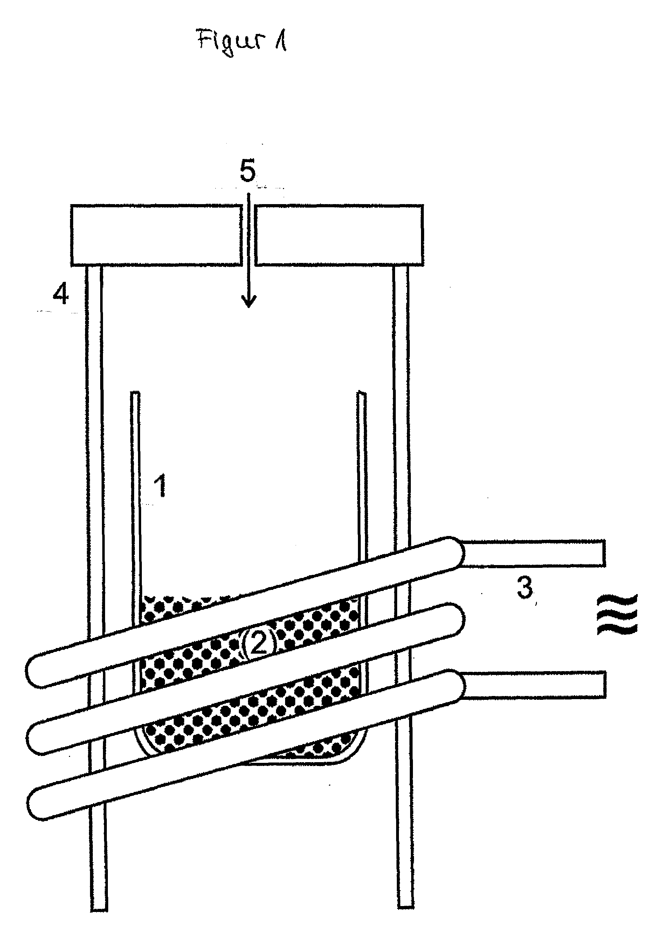

In einer ersten Variante gemäß Figur 1 befindet sich der Reaktor im Inneren der als Solenoidspule geformten Antenne 3 des Radiofrequenz-Generators. Die Wand 4 des Reaktors besteht aus Quarzglas.

Das zu behandelnde Material 2, beispielsweise eine Schüttung aus Kohlenstoff, der graphitiert werden soll, befindet sich während der Behandlung in einem Tiegel, einem Rohr oder einen anderen Reaktionsgefäß 1 aus einem Material, das bei den entsprechenden Temperaturen beständig ist und die eingestrahlte Energie nicht absorbiert. Geeignet sind beispielsweise Reaktionsgefäße aus Quarzglas.

Über die Gaszufuhr 5 erfolgt je nach Anwendung die Einleitung von Inert- oder Reaktionsgas oder/und das Anlegen von erhöhtem oder vermindertem Druck.

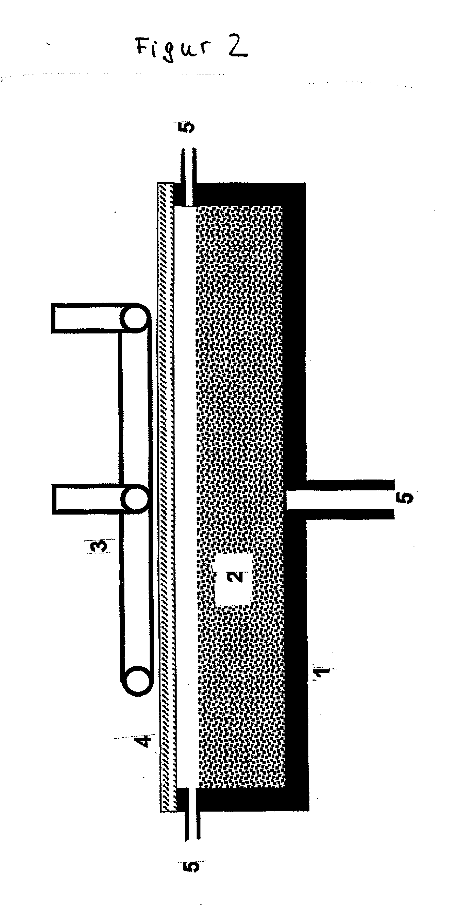

In einer zweiten Variante gemäß Figur 2 ist die Antenne 3 des Radiofrequenz-Generators planar und erstreckt sich über einer Oberfläche des zu behandelnden Materials.

Das zu behandelnde Material 2, beispielsweise eine Schüttung aus Kohlenstoff, der graphitiert werden soll, befindet sich in einem Reaktionsgefäß 1 und kann durch eine Wand 4 aus einem Material, dass im Gegensatz zu dem zu behandelnden Material 2 Radiofrequenzfelder nur in geringem Maße absorbiert, von der Antenne 3 getrennt werden. In dieser Konfiguration ist das Gefäß 1 nur einem abgeschwächten Radiofrequenzfeld ausgesetzt, daher kann hier ein Gefäß 1 aus einem Radiofrequenzfelder absorbierenden Material wie Graphit eingesetzt werden.

Die Erwärmung des zu behandelnden Materials 2 erfolgt innerhalb einer Dünnschicht unterhalb der planaren Antenne 3.

Der Reaktor 4 ist mit Vorrichtungen 5 für die Einleitung von Inert- oder Reaktionsgas oder/und das Anlegen von erhöhtem oder vermindertem Druck ausgestattet.

Wenn bei der Erwärmung des Radiofrequenzfelder absorbierenden Materials 2 Gase freigesetzt werden, beispielsweise die bei der Graphitierung von Koks entstehenden Spaltgase, können diese ungehindert aus der erwärmten Zone entweichen. Zudem können Inert- bzw. Reaktivgase in die Dünnschicht der Schüttung hinein diffundieren oder gezielt eingeleitet werden, um den dort ablaufenden Prozess, beispielsweise den Graphitierungsprozess, durch chemische Reaktionen zu unterstützen und die Reaktionsprodukte abzuführen.

Die Temperaturverteilung der Schüttung kann über die Geometrie der Antenne beeinflusst werden. Dazu wird die Antenne beispielsweise mit der Geometrie eines Mäanders, einer Spirale oder einer strahlenförmigen oder zaunförmigen Leiteranordnung ausgebildet.

Für das erfindungsgemäße Verfahren geeignet sind Frequenzen aus dem Frequenzband von 100 kHz bis 300 MHz (Radiofrequenz). Innerhalb dieses Bandes existieren die Bereiche Langwelle, Mittelwelle, Kurzwelle und Ultrakurzwelle, sie alle können für das erfindungsgemäße Verfahren benutzt werden. Vorzugsweise werden Frequenzen aus dem Bereich Kurzwelle oder Ultrakurzwelle von 1 MHz bis 300 MHz verwendet, da die Energieabsorption mit der Frequenz zunimmt.

Besonders geeignet sind sogenannte "Technische Frequenzen", d.h. Frequenzen, die von der jeweiligen zuständigen Behörde zugelassen sind. Bei der Nutzung solcher Frequenzen sind üblicherweise keine weiteren Schutzmaßnahmen zu treffen.

Die Dauer der Einwirkung des Radiofrequenzfeldes beträgt einige Sekunden bis Minuten. Für den Graphitierungsgrad ist neben anderen Parametern wie z.B. der Dauer der Behandlung, dem Druck sowie katalytischen Einflüssen entscheidend, welche Temperatur erreicht wird. Somit ist bei der Nutzung des erfindungsgemäßen Verfahrens für die Graphitierung die Dauer der Behandlung davon abhängig, wie schnell eine für die Graphitierung ausreichende Temperatur erreicht wird. Die Dauer der Behandlung kann sich verlängern, wenn Verunreinigungen ausgetrieben werden müssen und es zur Bildung von Spaltgasen kommt, oder wenn erst die Umwandlung eines Precursors in Kohlenstoff erfolgen muss.

Das Verfahren kann auch derart ausgeführt werden, dass das zu behandelnde Material kontinuierlich durch das elektromagnetische Feld transportiert wird. Dazu werden die vorstehend beschriebenen Vorrichtungen mit entsprechenden Vorrichtungen zur Zuführung des zu behandelnden und zum Abtransport des behandelten Materials kombiniert.

Insbesondere die Vorrichtung gemäß Figur 2 eignet sich für den kontinuierlichen Betrieb. Der Materialtransport kann dabei vorwiegend vertikal oder vorwiegend horizontal erfolgen.

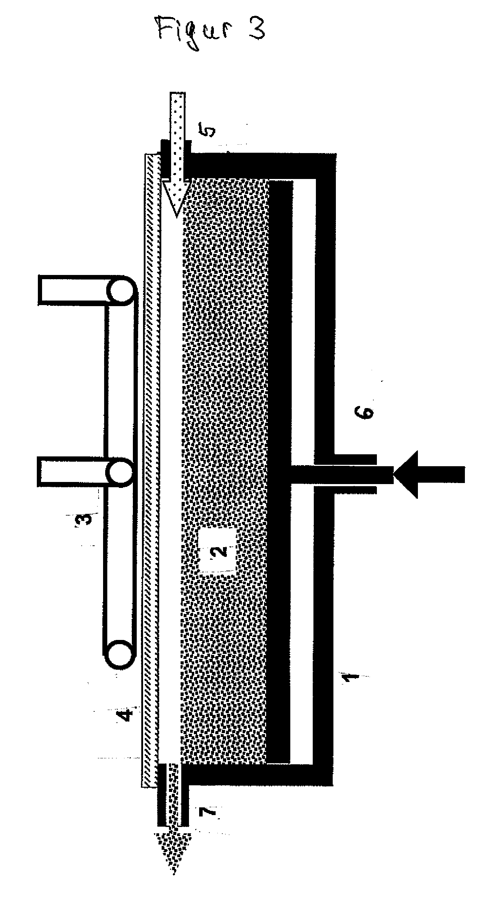

Gemäß Figur 3 erfolgt die Zuführung des zu behandelnden Materials über einen vertikalen Transportmechanismus 6, beispielsweise mittels einen Hubbodens oder Schneckenförderers, entgegen der Schwerkraft. Der Austrag erfolgt horizontal an der obersten Schicht der Schüttung 2 aus dem zu behandelnden Material. Das auszutragende Material wird beispielsweise mittels eines Gaspulses aus der Gaseinleitungsvorrichtung 5, eines mechanischen Abstreifers oder eines Rüttlers zur Entnahmeöffnung 7 gefördert.

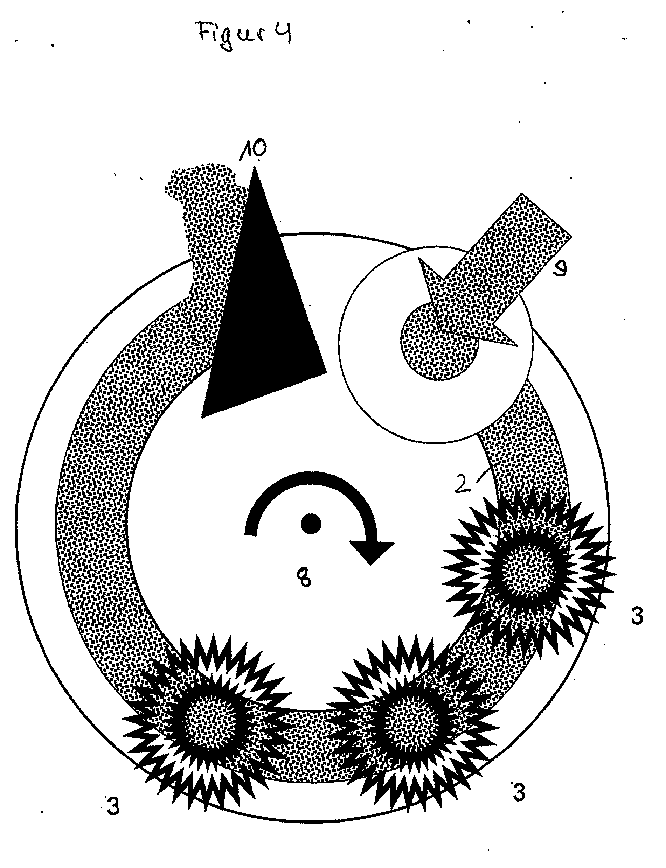

Eine Vorrichtung zur kontinuierlichen Verfahrensführung mit einer oder mehreren planaren Antennen 3 und vorwiegend horizontalem Materialtransport zeigt Figur 4. Der horizontale Materialtransport erfolgt mittels eines Drehtellers 8. Das zu behandelnde Material 2 wird an Position 9 in eine in die Oberfläche des Drehtellers 8 eingelassene Rinne eingefüllt, passiert während der Drehung des Drehtellers 8 das von den Antennen 3 erzeugte Radiofrequenzfeld und wird an Position 10 entnommen. Statt einer kontinuierlichen Rinne, in die das zu behandelnde Material eingefüllt wird, kann das zu behandelnde Material auch in einzelnen Reaktionsgefäßen bereitgestellt werden, die an Position 9 auf den Drehteller aufgesetzt und in Position 10 heruntergenommen werden. Mittels eines (in Figur 4 nicht dargestellten) Rührarmes kann das zu graphitierende Material nach Passieren der ersten Antenne 3 und vor Eintreten in den Bereich der nächsten Antenne 3 durchmischt werden. Auf diese Weise wird erreicht, dass auch das sich an den Randzonen befindliche Material vollständig graphitiert wird.

Darüber hinaus sind im Stand der Technik zahlreiche Vorrichtungen für kontinuierliche Hochtemperaturbehandlungen bekannt, welche für das erfindungsgemäße Verfahren adaptiert werden können wie beispielsweise ein Durchschubofen, eine mit abwärts gerichtetem Materialtransport arbeitende Vorrichtung wie aus dem US-Patent 6,375,918, oder eine Vorrichtung mit Aufwärtsförderung des zu behandelnden Materials in die Reaktionszone und paralleler Abwärtsförderung des behandelten Materials. Eine solche Vorrichtung ist beispielsweise aus der europäischen Patentanmeldung EP 1 512 665 bekannt.

Bei dem erfindungsgemäßen Verfahren können an der Oberfläche des zu behandelnden Kohlenstoffmaterials Temperaturen von mehr als 2900 °C erreicht werden, wie Messungen mittels Quotientenpyrometrie belegen.

In den Vorrichtungen gemäß Figur 1 bis 3 wird die elektromagnetische Energie durch ein hochtemperaturbeständiges, Radiofrequenzfelder nicht absorbierendes Wandmaterial hindurch in das zu graphitierende Kohlenstoffmaterial appliziert, während bei der Graphitierung mit Mikrowellen gemäß US 6,375,918 die elektromagnetische Energie direkt auf das zu graphitierende Material appliziert wird. Das heißt, beim erfindungsgemäßen Verfahren kann die Energiequelle (die Antenne des Radiofrequenz-Generators) durch ein Wandmaterial von der Reaktionszone getrennt werden. Dies ist ein besonderer Vorteil gegenüber dem Verfahren aus US 6,375,918, wenn die zu graphitierenden Kohlenstoffmaterialien zur Freisetzung korrosiver Gase (Spaltgase) neigen. Durch Anlegen eines verminderten Drucks oder/und eines Inertgasstromes können bei der Behandlung entstehende gasförmige Verbindungen aus der Reaktionszone heraus geführt werden. Außerdem können Reinigungsgase zur selektiven Entfernung bestimmter, z.B. metallischer Verunreinigungen durchgeleitet werden. Dadurch wird es möglich, hochreine Graphite bereitzustellen.

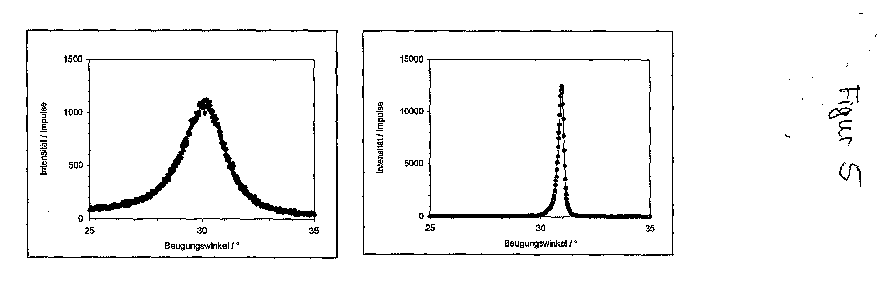

Die mit dem erfindungsgemäßen Verfahren erreichte Graphitierung bzw. Zunahme des Graphitierungsgrades kann mittels Röntgenpulverdiffraktometrie (XRD) nachgewiesen werden. Anhand des Diffraktogramms (Figur 5) kann eindeutig zwischen röntgenamorphen Kohlenstoffen, wie z.B. Koksen, einerseits und kristallinem Graphit andererseits unterschieden werden. Mit zunehmendem Graphitierungsgrad verschiebt sich die Lage des Intensitätsmaximums der Röntgenbeugungskurve von kleineren zu größeren Beugungswinkeln 2Theta, die Höhe des Intensitätsmaximums der Beugungskurve nimmt zu und die Halbwertsbreite (FWHM) der die Beugungsintensität beschreibenden Profilfunktion verringert sich. Alle drei Effekte können mittels XRD reproduzierbar und mit großer Genauigkeit gemessen werden, wodurch selbst geringe Unterschiede zwischen den Graphitierungsgraden zweier Kohlenstoffmaterialien anhand ihrer Röntgenbeugungskurven zuverlässig festgestellt werden können.

### Ausführungsbeispiel

Die Graphitierung von kalziniertem Kohlenteerpech-Koks (coal tar pitch coke) wurde in den Vorrichtungen gemäß Figur 1 und Figur 2 untersucht.

8 g Koks kamen als Pulverschüttung zum Einsatz, wobei die Partikelgröße mit d₉₀ ≤ 50 µm im mikroskopischen Bereich lag.

In beiden Vorrichtungen betrug die Frequenz 4 MHz, dies ist eine freigegebene "technische Frequenz". Die verwendete mittlere Leistung des Radiofrequenz-Generators betrug 1,7 kW. Es wurden Reaktionsgefäße aus Quarzglas benutzt, die selbst durch die eingestrahlte Energie nicht erwärmt wurden. Im Reaktor wurde jeweils eine Inertgasatmosphäre hergestellt. Die Dauer der Einstrahlung der Radiofrequenz betrug 4 Minuten.

Bei der Vorrichtung gemäß Figur 1 erfolgte eine Bestimmung der Temperatur der Koksschüttung während der Behandlung mit einem Quotientenpyrometer. Die Temperatur der Koksschüttung erreichte 2950 °C, also eine zur Graphitierung ausreichende Temperatur.

Die erreichte Graphitierung widerspiegelt sich in der Veränderung des Röntgendiffraktogramms (Figur 5). Beide XRD-Analysen wurden mit monochromatisierter Kobalt Kα_{1,2}-Strahlung unter identischen Aufnahmebedingungen durchgeführt. Vor der Behandlung (linkes Diffraktogramm) betrug die Halbwertsbreite der Intensitätsverteilung 2,1°, nach der Behandlung 0,290° (rechtes Diffraktogramm). Außerdem hat sich im Ergebnis der Behandlung mit dem Radiofreqeuenz-Feld die Lage des Intensitätsmaximums zu einem um 0,76° höheren Beugungswinkel verschoben, und die untergrundkorrigierte Höhe des Intensitätsmaximums ist um den Faktor 12 angestiegen. (Die Skalierung der Y-Achsen der beiden abgebildeten Diffraktogramme unterscheidet sich um den Faktor 10).

## Patentansprüche

1. Verfahren zur Graphitierung von nicht graphitischem Kohlenstoff durch Erwärmung mittels Einwirkung elektromagnetischer Felder,
**dadurch gekennzeichnet, dass**
die Felder eine Frequenz im Bereich von 100 kHz bis 300 MHz haben.

2. Verfahren nach Anspruch 1, **dadurch gekennzeichnet, dass**
der Kohlenstoff als Pulver, Paste oder Formkörper vorliegt.

3. Verfahren nach Anspruch 2, **dadurch gekennzeichnet, dass**
der Formkörper aus Kohlenstoff mit einem carboniserbaren oder graphitierbaren Binder wie Harz, Pech oder Teer imprägniert ist.

4. Verfahren nach Anspruch 1, **dadurch gekennzeichnet, dass**
der zu graphitierende Kohlenstoff während der Behandlung mit elektromagnetischen Feldern aus einem Kohlenstoffprecursor erzeugt wird, dem als elektromagnetische Radiofrequenz-Felder absorbierendes Hilfsmaterial Graphit zugesetzt ist.

5. Verfahren zur Erhöhung des Graphitierungsgrades von Kohlenstoff mit einem Graphitierungsgrad < 100 % durch Erwärmung mittels Einwirkung elektromagnetischer Felder, **dadurch gekennzeichnet, dass**
die Felder eine Frequenz im Bereich von 100 kHz bis 300 MHz haben.

6. Verfahren zur thermischen Reinigung von Graphit durch Erwärmung mittels Einwirkung elektromagnetischer Felder, **dadurch gekennzeichnet, dass**
die Felder eine Frequenz im Bereich von 100 kHz bis 300 MHz haben.

7. Verfahren zur Ausheilung struktureller Defekte in Materialien mit gestörter Graphitstruktur durch Erwärmung mittels Einwirkung elektromagnetischer Felder,
**dadurch gekennzeichnet, dass**
die Felder eine Frequenz im Bereich von 100 kHz bis 300 MHz haben.

8. Verfahren gemäß Anspruch 1, 5, 6 oder 7, **dadurch gekennzeichnet, dass**
das Radiofrequenzfeld über eine Solenoidspule in das zu behandelnde Material eingekoppelt wird, welche das Reaktionsgefäß mit dem zu behandelnden Material umschließt.

9. Verfahren gemäß Anspruch 1, 5, 6 oder 7, **dadurch gekennzeichnet, dass**
das Radiofrequenzfeld über eine planare Antenne in das zu behandelnde Material eingekoppelt wird.

10. Verfahren gemäß Anspruch 1, 5, 6 oder 7, **dadurch gekennzeichnet, dass**
das Verfahren in einer inerten oder reaktiven Gasatmosphäre bei Normaldruck, bei erhöhtem oder reduziertem Druck ausgeführt wird.

11. Verfahren gemäß Anspruch 1, 5, 6 oder 7 **dadurch gekennzeichnet, dass**
während des Verfahrens das zu behandelnde Material mit einer reaktiven Gasatmosphäre in Kontakt steht, welche freigesetzte Verunreinigungen bindet und austrägt.

12. Verfahren gemäß Anspruch 1, 5, 6 oder 7, **dadurch gekennzeichnet, dass**
während des Verfahrens ein kontinuierlicher Antransport des zu behandelnden Materials und ein kontinuierlicher Abtransport des behandelten Materials erfolgt.

13. Verfahren gemäß Anspruch 1, 5, 6 oder 7, **dadurch gekennzeichnet, dass**
die Applikation der Radiofrequenzfelder durch eine Wand hindurch erfolgt, die selbst Radiofrequenz-Felder nur in wesentlich geringem Maße als das zu behandelnde Material absorbiert.

14. Verfahren nach Anspruch 1, 5, 6 oder 7 **dadurch gekennzeichnet, dass**
dem zu behandelnden Material Graphit oder ein anderes Radiofrequenzfelder absorbierendes Material zugesetzt ist.
